# EUROPÄISCHE PATENTANMELDUNG

(11) **EP 1 693 230 A2**
(43) Veröffentlichungstag der Anmeldung: **23.08.2006**
(21) Anmeldenummer: 06115189.0
(22) Anmeldetag: 14.10.2003
(51) Int. Cl.: B60C 11/12, B60C 11/11

(54) **Fahrzeugluftreifen zum Einsatz unter winterlichen Fahrbedingungen**

(30) Priorität: 10.12.2002 DE 10257487
(62) Teilanmeldung aus: 03023057.7
(71) Anmelder: Continental Aktiengesellschaft, 30165 Hannover (DE)
(72) Erfinder: Diensthuber, Franz, 30167, Hannover (DE); Schlittenhard, Jan, 30900, Wedemark (DE)

(57) **Zusammenfassung**

Es ist ein Fahrzeugluftreifen zum Einsatz unter winterlichen Fahrbedingungen offenbart, dessen Laufstreifenprofil durch Längsrillen und Schrägrillen in voneinander getrennten Profilblöcken untergliedert ist, wobei die Profilblöcke im Wesentlichen parallel zueinander angeordnete Feineinschnitte aufweisen, welche im Abstand zu Profilblockkanten angeordnet sind. Erfindungsgemäß zeichnet sich der Fahrzeugluftreifen dadurch aus, dass die Breite der Feineinschnitte von der Profilblockkante zur Profilblockmitte hin zunimmt.

## Beschreibung

Die Erfindung betrifft einen Fahrzeugluftreifen zum Einsatz unter winterlichen Fahrbedingungen gemäß dem Oberbegriff des Patentanspruchs1.

Gattungsgemäße Fahrzeugluftreifen, nämlich Winterreifen, sind beispielsweise aus der DE 196 35 147 A1 bekannt. Üblicherweise weisen derartige Winterreifen Umfangsrillen, Schrägrillen und/oder Querrillen auf, welche eine Vielzahl von Profilblöcken trennen, welche bei moderneren Konzeptionen schräg zur Umfangsrichtung des Reifen und schräg zueinander verlaufen bzw. angeordnet sind, so dass das Laufstreifenprofil insgesamt pfeilartig untergliedert ist. Die Profilblockelemente innerhalb der Laufstreifenmitte, wie auch die Profilblöcke im Schulterbereich des Reifens weisen Feineinschnitte auf, welche fälschlicherweise als Lamellen bezeichnet werden. Diese Feineinschnitte weisen in Aufsicht auf das Laufstreifenprofil einen meanderförmigen, zickzackförmigen oder geraden Verlauf auf und können im Radialschnitt ebenso gerade, schräg oder dreidimensional sein.

Durch die Feineinschnitte entstehen beim Betrieb des Reifens eine Vielzahl von sich öffnenden und wieder schließenden Kanten und Spalten, welche sich beim Fahren auf Schnee und Eis in die derart ausgebildete Fahrbahnoberfläche einkrallen und ein sicheres Fahrverhalten unter winterlichen Bedingungen ermöglichen sollen.

Profilblöcke mit Feineinschnitten haben sich seit langem für Winterreifen bewährt. Dennoch können bisherige Lösungen nicht in allen Punkten befriedigen. Insbesondere in Bezug auf das Traktions- und Bremsvermögen von Winterreifen ist noch Raum für Verbesserungen. Entsprechend ist Aufgabe vorliegender Erfindung die Verbesserung von bekannten Winterreifen hinsichtlich der Wintereigenschaften und des Vermögens des Übertragens von Traktions- und Bremskräften.

Diese Aufgabe wird erfindungsgemäß mit einem Reifen gelöst, welcher die Merkmale des Patentanspruchs 1 aufweist. Die Feineinschnitte werden bezüglich ihrer Breite über die Länge des Profilklotzes variiert, wobei die Feineinschnittbreite vom Profilklotzrand bis zur Profilklotzmitte hin zunimmt. Hier wird also gezielt eine Asymmetrie durch die Breite der Feineinschnitte selbst erzeugt. Der sich einstellende Effekt ist der, dass die Öffnungsfähigkeit der Feineinschnitte auf diese Weise zur Profilklotzmitte hin erhöht wird. Bekanntlich presst sich Schnee beim Fahren auf schneebedeckten Fahrbahnen in die Feineinschnitte. Dieser Schnee trägt beträchtlich über Schnee-Schnee-Reibung zum Bremsen und Traktionen bei. Bei herkömmlichen Lösungen presst sich in die blockinneren Feineinschnitte deutlich weniger Schnee ein. Mit der erfindungsgemäßen Lösung erfolgt aber eine sehr viel gleichmäßigere Füllung der Feineinschnitte im Fahrbetrieb, denn die Beweglichkeit der Feineinschnitte in der Klotzmitte wird durch breiter oder dicker ausgeführte Feineinschnitte deutlich erhöht. Hierdurch wird ebenso die Schnee-Schnee-Reibung erhöht und es wird die Fräswirkung der Feineinschnittkanten verstärkt. Hieraus resultiert eine Verbesserung der Brems- und Traktionseigenschaften des Reifens.

Bei der vorteilhaften Ausgestaltung eines Fahrzeugluftreifens gemäß Patentanspruch 2, bei der die von Feineinschnitten eingeschlossenen Profilblocksegmente des Profilblocks ungleich breit sind, wobei die Breite dieser Profilblocksegmente zur Mitte des Profilblocks hin geringer ist als die Breite der Profilblocksegmente an der Außenseite bzw. an den Außenkanten des Profilblocks, lassen sich die Wintereigenschaften weiterhin deutlich verbessern, weil hierdurch die Blocksteifigkeit bzw. die Steifigkeit der Feineinschnitte vergleichmäßigt wird. Mit dieser vorteilhaften Ausgestaltung entfernen sich die Erfinder bewusst von herkömmlichen Ansätzen, nach denen versucht wurde, den Abstand der Feinabschnitte zueinander und damit die Breite der von den Feineinschnitten eingeschlossenen Profilblocksegmenten möglichst gleichzuhalten. Denn die von Feineinschnitten begrenzten Profilblocksegmente besitzen am Profilblockrand eine geringere Steifigkeit als die Segmente in der Blockmitte. Dies ist durch unterschiedliche Abstützungs- und Stabilisierungseffekte im Block begründet. Die Steifigkeit der Segmente in der zweiten bis n-ten-Reihe wird durch ihren Nachbarn verstärkt und nimmt von Rand her immer weiter zu. Nun wird es ermöglicht, eine gleichmäßigere Profilklotzsegmentsteifigkeit einzustellen, in dem Abstand der Feineinschnitte vom Klotzrand zur Mitte hin variiert, d. h. verkleinert wird. Anders ausgedrückt wird die Steifigkeit der Profilklotzsegmente am Klotzrand erhöht, wohingegen sie in der Blockmitte abgesenkt wird.

Auf diese Weise werden die Wintereigenschaften durch eine gleichmäßigere Steifigkeit der Profilblocksegmente verbessert. Alle Kanten der Feineinschnitte tragen gleichmäßig zur Übertragung von Brems- bzw. Traktionskräften bei, da sich durch die einheitliche Steifigkeit der Kanteneffekt bei allen Feineinschnittkanten gleich stark ausbildet. Ferner können die Feineinschnittanhebungen der am Rand befindlichen Einschnitte durch die erhöhte Steifigkeit kleiner ausgeführt werden, was sich zusätzlich positiv auf die Wintereigenschaft auswirkt.

Dieser vorbeschriebenen Effekt, der mit dieser vorteilhaften Ausgestaltung erzielt wird, wird ebenfalls mit einem Fahrzeugluftreifens gemäß Patentanspruch 1 bewirkt.

Weitere Vorteile und Ausgestaltungen der Erfindung, welche Gegenstand der weiteren Patentansprüche sind, werden im Folgenden anhand von Ausführungsbeispielen in der Beschreibung und in der Zeichnung näher dargestellt. In der Zeichnung ist
- Fig. 1: die Aufsicht auf ein erstes Ausführungsbeispiel eines Laufstreifenprofils eines erfindungsgemäßen Fahrzeugluftreifens,
- Fig. 2: eine Prinzipskizze eines einzelnen Profilblocks nach dem Stand der Technik,
- Fig. 3: eine Prinzipskizze eines Profilblocks gemäß einer vorteilhaften Ausgestaltung der Erfindung,
- Fig. 4: ein Ausführungsbeispiel eines Profilblocks nach der Erfindung,
- Fig. 5: den Profilblock aus Figur 4 im geöffneten Zustand,
- Fig. 6: die Aufsicht auf ein weiteres Ausführungsbeispiel eines Laufstreifenprofils,
- Fig. 7: ein Profilblock aus Fig. 6 im geöffneten Zustand, und
- Fig. 8: derselbe Profilblock im normalen Zustand.

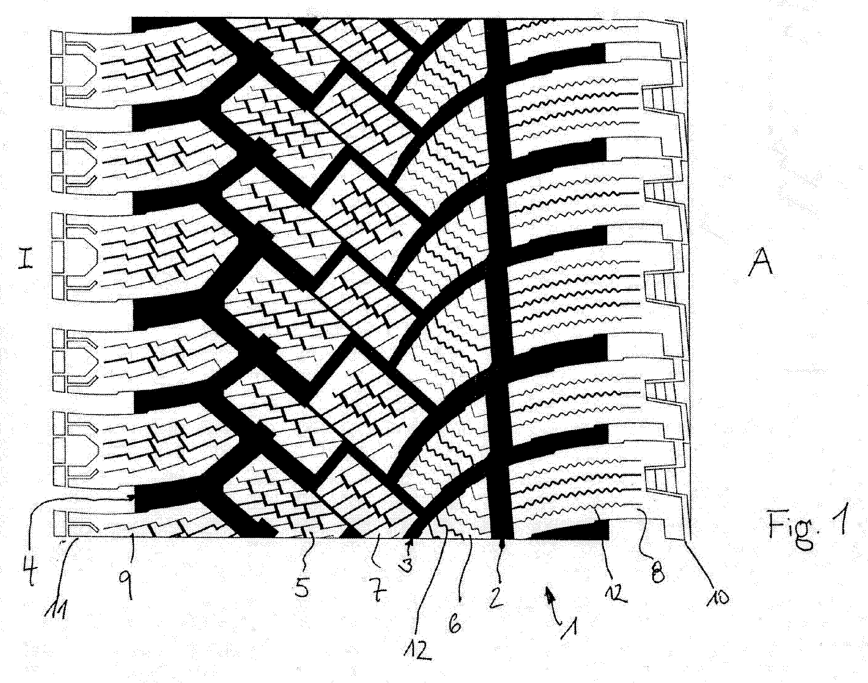

In Figur 1 ist ein erstes Ausführungsbeispiel eines Laufstreifenprofils 1 eines Winterreifens in maßstabsgetreuer Darstellung gezeigt. Der Laufstreifen 1 weist eine Längsrille 2 und eine Reihe von Schrägrillen 3, 4 auf, durch welche der Laufstreifen in eine Reihe von Profilblöcken 5 bis 9 unterteilt wird, wobei die Profilblöcke 8 und 9 die axial außenseitig angeordneten Schulterblockreihen 10 und 11 bilden. Die Profilblöcke 5 bis 9 weisen Feineinschnitte auf, wobei Feineinschnitte 12 der Profilblöcke 6 und 8 einen wellenförmigen Verlauf aufweisen, während Feineinschnitte 13 der Profilblöcke 5, 7 und 9 einen geraden Verlauf aufweisen.

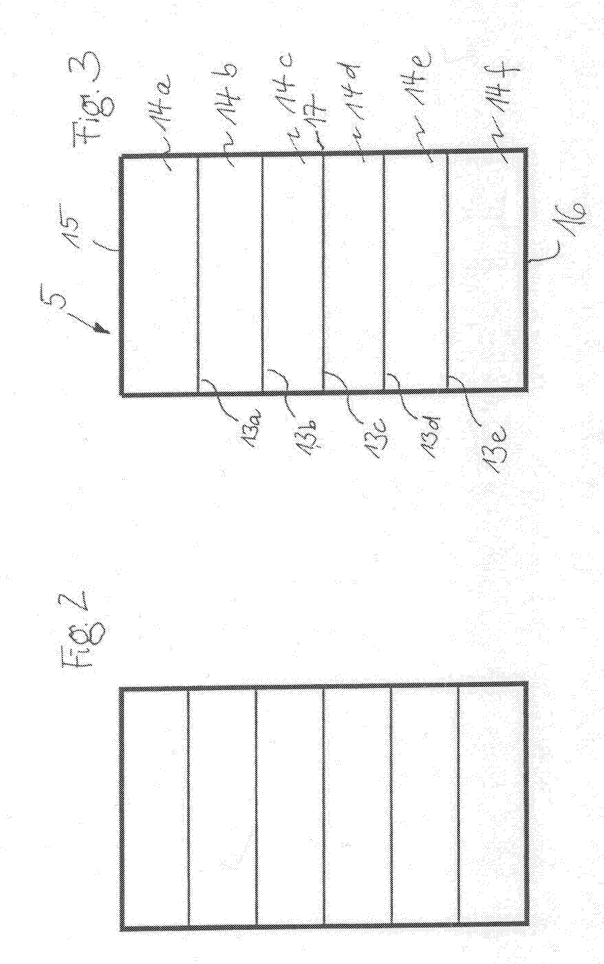

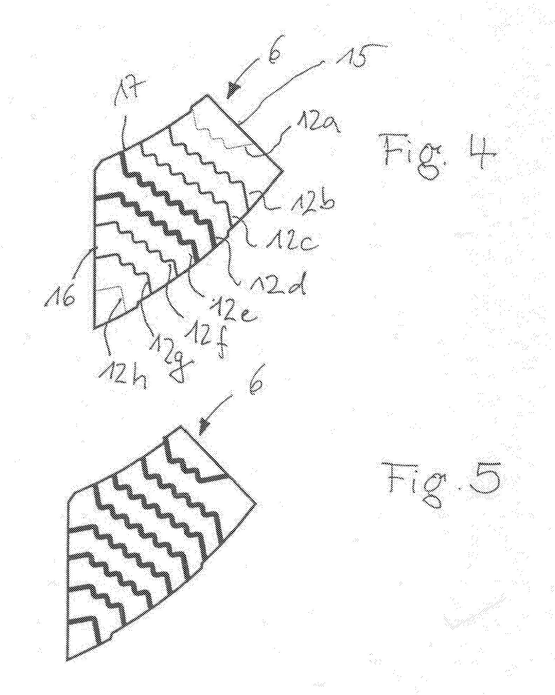

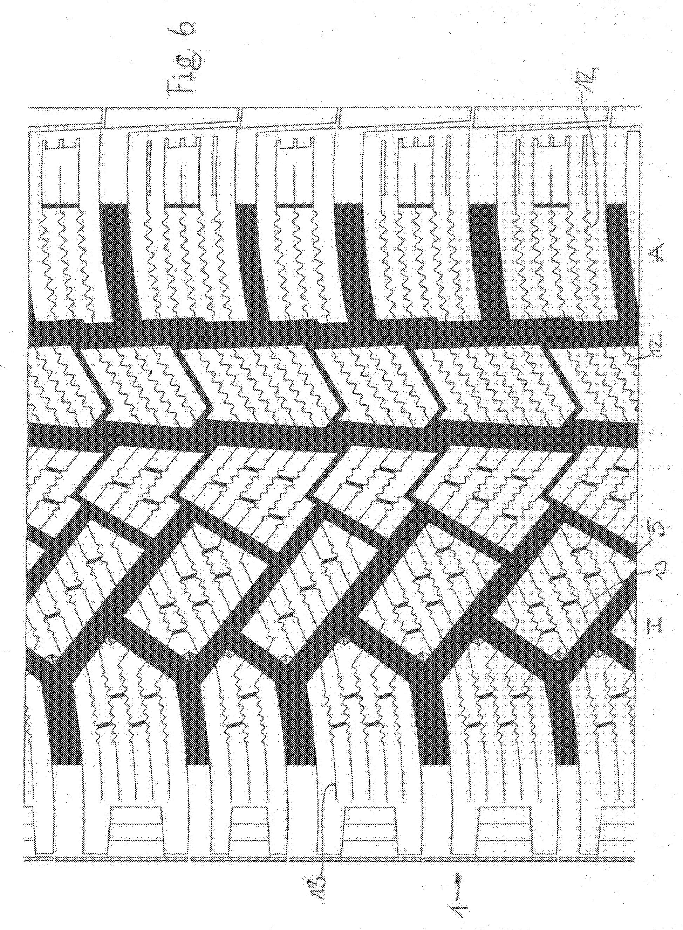

Der prinzipielle Aufbau der Profilblockelemente gemäß der Erfindung ist in den Figuren 4, 5 näher dargestellt, eine vorteilhafte Ausgestaltung ist in Figur 3 dargestellt, während Figur 2 zum besseren Verständnis den normalen Aufbau gemäß dem Stand der Technik darstellt.

In den Figuren 4 und 5 ist jeweils ein Profilblock 6 dargestellt, welcher mit wellenförmigen Feineinschnitten 12a bis 12h versehen ist. Die Breite bzw. Dicke des Feineinschnitte 12a und 12h ist geringer als die Breite der Feineinschnitte 12b, 12c, 12f und 12g. Wiederum sind die Feineinschnitte 12d und 12e in der Profilblockmitte dicker als alle anderen Feineinschnitte. Die Figur 4 zeigt dabei den Profilblock 6 im normalen, d. h. unbelasteten Zustand, während die Figur 5 den selben Profilblock 6 unter Last im Latsch darstellt. Der in Figur 5 dargestellte Zustand entspricht also dem Zustand, bei dem der Profilblock 6 genau auf der Fahrbahnoberfläche steht. Deutlich zu erkennen ist, dass durch die ungleichmäßige Dicke der Feineinschnitte unter Last eine völlig gleichmäßige Öffnungsbreite entsteht, wodurch Schnee in alle Feineinschnitte gleich weit eindringen kann.

In Figur 3 ist eine vorteilhafte Ausführungsform der Erfindung gemäß Patentanspruch 2 dargestellt. Der dort schematisch dargestellte Profilblock 5 weist fünf Feineinschnitte 13a bis 13 e auf. Die Feineinschnitte 13a bis 13e unterteilen den Profilblock 5 in sechs Profilblocksegmente 14a bis 14f. Die Profilblocksegmente 14a und 14f, welche den parallel zu den Feineinschnitten 13a bis 13e befindlichen Profilblockkanten 15 und 16 am nächsten sind bzw. von diesen begrenzt sind, weisen eine größere Breite auf als die jeweils benachbarten Profilblocksegmente 14b und 14e, welche ihrerseits breiter sind als die Profilsegmente 14c und 14d der Profilblockmitte 17.

Die Breite der Profilblocksegmente 14a bis 14f nimmt also zur Profilblockmitte hin ab, während sie üblicherweise nach dem Stand der Technik, wie in der schematischen Figur 2 dargestellt ist, stets gleichbleibend ist.

In Fig. 6 ist ein weiteres Ausführungsbeispiel eines erfindungsgemäßen Laufstreifens 1 im Maßstab 1:1 dargestellt. Dieser entspricht weitgehend dem Laufstreifen 1 aus Fig. 1, wobei sich die vor allem Feineinschnitte 13 der Profilblöcke der axial inneren Seite I von den Feineinschnitten 13 aus Fig. 1 unterscheiden. Die Profilblöcke der axial äußeren Seite A entsprechen weitgehend denen aus Fig. 1.

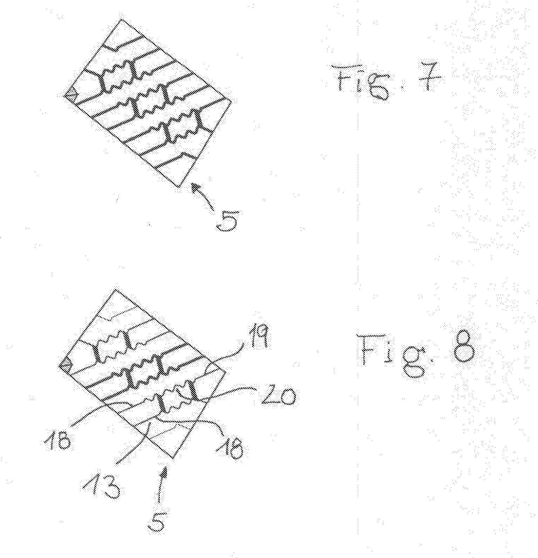

Ein einzelner Profilblock 5 aus Fig. 6 ist in den Fig. 7 und 8 dargestellt. Dieser weist entsprechend dem Profilblock 6 aus den Fig. 4 und 5 Feineinschnitte 13 unterschiedlicher Breite auf, wodurch sich im Zustand unter Last (Fig. 7) gleich breite Spalten einstellen. Die Feineinschnitte 13 gemäß den Figuren 7 und 8 weisen jeweils zu den Längskanten des Profilblocks 5 hin zugewandte Endbereiche 18, 19 auf, welche einen geraden Verlauf aufweisen und durch einen Mittenbereich 20 miteinander verbunden sind, wobei der Mittenbereich einen wellenförmigen Verlauf aufweist.

### Bezugszeichenliste

### (Teil der Beschreibung)

- 1: Laufstreifen
- 2: Längsrille
- 3: Schrägrille
- 4: Schrägrille
- 5: Profilblock
- 6: Profilblock
- 7: Profilblock
- 8: Profilblock
- 9: Profilblock
- 10: Schulterblockreihe
- 11: Schulterblockreihe
- 12: Feineinschnitt
- 13 a - e: Feineinschnitt
- 14 a - f: Profilblocksegment
- 15: Profilblockkante
- 16: Profilblockkante
- 17: Profilblockmitte
- 18: Endbereich
- 19: Endbereich
- 20: Mittenbereich

- A: axiale Außenseite des Laufstreifens
- I: axiale Innenseite des Laufstreifens

## Patentansprüche

1. Fahrzeugluftreifen zum Einsatz unter winterlichen Fahrbedingungen, mit einem Laufstreifenprofil (1), welches durch Längsrillen (2) und Schrägrillen (3, 4) in von einander getrennten Profilblöcken (5 - 9) untergliedert ist, wobei die Profilblöcke (5 - 9) im Wesentlichen parallel zueinander angeordnete Feineinschnitte (12, 13) aufweisen, welche im Abstand zu Profilblockkanten (15, 16) angeordnet sind, **dadurch gekennzeichnet, dass** die Breite der Feineinschnitte (12) von der Profilblockkante (15; 16) zur Profilblockmitte (17) hin zunimmt.

2. Fahrzeugluftreifen nach Anspruch 1, **dadurch gekennzeichnet, dass** sich der Abstand der Feineinschnitte zueinander von der Profilblockkante (15; 16) zur Profilblockmitte (17) verkleinert, derart, dass von Feineinschnitten (13) eingeschlossene Profilblocksegmente (14) in der Profilblockmitte schmaler sind als im Bereich der Profilblockkante (15; 16).

3. Fahrzeugluftreifen nach Anspruch 1 und 2, **dadurch gekennzeichnet, dass** die Profilblöcke (5 - 9) ungleich breite Profilblocksegmente (14) und ungleich breite Feineinschnitte (12) aufweisen.

4. Fahrzeugluftreifen nach einem der vorangegangenen Ansprüche, **dadurch gekennzeichnet, dass** die Breite der Feineinschnitte (12, 13) 0,1 mm bis 5 mm, insbesondere 0,3 - 0,8 mm beträgt.

5. Fahrzeugluftreifen nach einem der vorangegangenen Ansprüche, **dadurch gekennzeichnet, dass** die Breite der Profilblocksegmente (14) 2 mm bis 50 mm, insbesondere 3 - 10 mm beträgt.

6. Fahrzeugluftreifen nach einem der vorangegangenen Ansprüche, **dadurch gekennzeichnet, dass** axial innen angeordnete Profilblöcke (5, 7, 9) im Wesentlichen gerade verlaufende Feineinschnitte (13) aufweisen, welche jeweils in einem Profilblock (5; 7; 9) ungleich breite Profilblocksegmente einschließen, während auf der axial äußeren Fahrzeugseite Profilblöcke (6, 8) angeordnet sind, welche wellenlinienartige Feineinschnitte (12) aufweisen, wobei die Feineinschnitte (12) innerhalb eines Profilblocks (6; 8) unterschiedliche Breite aufweisen, derart, dass die zur Profilblockmitte (17) angeordneten Feineinschnitte (12) eine größere Breite aufweisen als die zu den Profilblockkanten (15; 16) hin angeordneten Feineinschnitte (12).

7. Fahrzeugluftreifen nach einem der vorangegangenen Ansprüche, **dadurch gekennzeichnet, dass** axial innen angeordnete Profilblöcke (5, 7, 9) Feineinschnitte (13) aufweisen, welche jeweils in einem Profilblock (5; 7; 9) ungleich breite Profilblocksegmente einschließen, wobei die Feineinschnitte (13) der axial inneren Seite (I) jeweils zwei gerade verlaufende Endbereiche (18, 19) und einen wellenartig verlaufenden Mittenbereich (20) aufweisen, während auf der axial äußeren Fahrzeugseite Profilblöcke (6, 8) angeordnet sind, welche wellenlinienartige Feineinschnitte (12) aufweisen, wobei die Feineinschnitte (12) innerhalb eines Profilblocks (6; 8) unterschiedliche Breite aufweisen, derart, dass die zur Profilblockmitte (17) angeordneten Feineinschnitte (12) eine größere Breite aufweisen als die zu den Profilblockkanten (15; 16) hin angeordneten Feineinschnitte (12).

8. Fahrzeugluftreifen nach einem der vorangegangenen Ansprüche, **dadurch gekennzeichnet, dass** die Feineinschnitte (12, 13) jeweils parallel zu den Profilblockkanten (15, 16) angeordnet sind.

9. Fahrzeugluftreifen nach einem der vorangegangenen Ansprüche, **dadurch gekennzeichnet, dass** die Breite der Feineinschnitte (12, 13) von der Profilblockkante (15; 16) zur Profilblockmitte (17) gestaffelt ist in eine Breitenreihung: 0,4 mm - 0,5 mm - 0,5 mm - 0,6 mm.

10. Fahrzeugluftreifen nach einem der vorangegangenen Ansprüche, **dadurch gekennzeichnet, dass** die Breite der Feineinschnitte (12, 13) von der Profilblockkante (15; 16) zur Profilblockmitte (17) gestaffelt ist in eine Breitenreihung: 0,4 mm - 0,5 mm - 0,5 mm - 0,6 mm - 0,6 mm - 0,6 mm.
